# EUROPÄISCHE PATENTSCHRIFT

(11) **EP 3 266 662 B1**
(45) Veröffentlichungstag und Bekanntmachung des Hinweises auf die Patenterteilung: **19.02.2020**
(21) Anmeldenummer: 17177859.0
(22) Anmeldetag: 26.06.2017
(51) Int. Cl.: B60T 8/42

(54) **DRUCKMODULATOR FÜR EIN ABS-SYSTEM**
PRESSURE MODULATOR FOR AN ABS SYSTEM
MODULATEUR DE PRESSION POUR UN SYSTÈME ABS

(30) Priorität: 07.07.2016 DE 102016112487
(43) Veröffentlichungstag der Anmeldung: 10.01.2018
(73) Patentinhaber: Brake Force One GmbH, 72074 Tübingen (DE)
(72) Erfinder: Lauhoff, Jakob, 72070 Tübingen (DE)
(74) Vertreter: Kohler Schmid Möbus Patentanwälte

(56) Entgegenhaltungen:
- EP-A1- 0 580 382
- WO-A1-81/00697
- WO-A1-97/29934
- DE-A1- 2 854 574
- DE-A1- 19 720 636
- DE-B3-102014 007 717
- JP-A- S61 181 751
- JP-A- 2015 074 345

## Beschreibung

Die Erfindung betrifft einen Druckmodulator für ein ABS-System mit einem Gehäuse, das einen Hydraulikeingang und einen damit über eine hydraulische Leitung verbundenen Hydraulikausgang aufweist, und mit einem Volumenspeicher, der bei einer aktivierten Antiblockierfunktion das Volumen der hydraulischen Leitung vergrößert, wobei ein Linearantrieb zur Öffnung des Volumenspeichers vorgesehen ist.

Ein solcher Druckmodulator ist beispielsweise aus der DE 10 2014 007 717 B3 bekannt geworden.

Die Anordnung des Standes der Technik lässt offen, wo das dort gezeigte Steuergerät angeordnet ist. Bei einer externen Anordnung muss darauf geachtet werden, dass für sicherheitskritische Signale entsprechend sichere Leitungen vorgesehen werden.

Die WO 97/29934 A1 offenbart einen Bremskraftverteiler, durch den die Bremskraft auf eine Vorderachse und eine Hinterachse verteilt wird.

Die EP 0 580 382 A1 offenbart ein Bremssystem mit einer elektronischen Steuerung, die auf ein Bremsansteuerungssignal reagiert, sowie Bremsventilen, die durch die elektronische Steuerung angesteuert werden.

Die DE 197 20 636 A1 offenbart eine Radbremse für ein Kraftfahrzeug gemäß dem Oberbegriff des Patentanspruchs 1.

Die WO 81/00697 A1 offenbart ein Bremssystem, bei dem eine Steuereinrichtung, die mit Sensoren in Verbindung steht, innerhalb eines Bremssattels angeordnet ist.

Aufgabe der vorliegenden Erfindung ist es, einen Druckmodulator weiterzubilden, der die oben genannten Probleme löst.

Gelöst wird diese Aufgabe durch einen Druckmodulator für ein ABS-System mit den Merkmalen des Anspruchs 1. Insbesondere kann ein als Elektronikschaltung ausgebildetes Steuergerät im Gehäuse des Druckmodulators angeordnet sein. Dadurch ergibt sich eine besonders platzsparende Anordnung. Die Elektronikschaltung kann gut geschützt und kostengünstig im Gehäuse des Druckmodulators angeordnet werden. Außerdem sind dadurch weniger sicherheitskritische und zeitkritische Signalverbindungen notwendig.

Die hydraulischen Ein- und Ausgänge können über Steckverbinder realisiert werden, um im Servicefall eine einfache und werkzeuglose Montage/Demontage zu ermöglichen.

Weitere Vorteile ergeben sich, wenn ein den Druck im Volumenspeicher erfassender im Gehäuse angeordneter Drucksensor vorgesehen ist. Durch diesen Drucksensor kann der Druck im Volumenspeicher erfasst werden und ausgehend davon kann der Druckmodulator und insbesondere eine Bremsanlage gesteuert werden.

Die Elektronikschaltung kann einen Beschleunigungssensor, einen Mikroprozessor und/oder eine Leistungsendstufe aufweisen. Somit können alle Komponenten, die für die Bestimmung zeitkritischer Signale notwendig sind, im Druckmodulator angeordnet sein. Zeitkritische Signale können im Druckmodulator erzeugt werden.

Der Drucksensor kann auf einer die Elektronikschaltung aufweisenden Platine angeordnet sein. Dabei kann der Drucksensor über eine direkte hydraulische Anbindung mit dem Volumenspeicher verbunden sein. Es ergibt sich dadurch eine kostengünstige, leichte und wenig platzbeanspruchende Anordnung des Drucksensors. Der Drucksensor kann insbesondere in SMD-Bauweise besonders kostengünstig direkt auf der Platine integriert sein.

Die Elektronikschaltung kann axial neben dem Volumenspeicher in einer (separaten) Kammer des Gehäuses angeordnet sein. Somit ist die Elektronikschaltung besonders gut geschützt und kostengünstig angeordnet. Es muss kein separates Gehäuse für die Elektronikschaltung bzw. für das Steuergerät vorgesehen sein.

Durch die Integration der Platine in das robuste metallische Gehäuse des Druckmodulators wird sie neben Umwelteinflüssen wie Dreck, Wasser, Staub auch vor EMV Störungen wie Abstrahlungen von anderen Steuergeräten, Motoren oder Ähnlichem geschützt. Die Integration von Drucksensor, Beschleunigungssensor und Microcontroller verhindert auch eine Störung der Signale durch Magnetfelder, da Signalwege zwischen Sensor und Controller quasi nicht mehr vorhanden sind.

Auch wird das Umfeld des Druckmodulators durch die Integration in das metallische Gehäuse vor der Abstrahlung des Druckmodulators und dessen Elektronik geschützt. So lassen sich Anordnungen an EMV-Verträglichkeit leichter umsetzen. Mögliche Positionen sind dabei einerseits eine Anordnung zwischen hydraulischem Eingang und Volumenspeicher, oder zwischen Volumenspeicher und hydraulischem Ausgang.

Die hydraulische Leistung ist durch die Elektronikschaltung hindurchgeführt. Auch denkbar wäre, sowohl hydraulischen Eingang und Ausgang und Elektronikschaltung auf einer Seite anzubringen. Dies kann zweckmäßig sein, wenn am Fahrzeug alle Leitungen aus der gleichen Richtung zum Aktuator geführt werden. Dies ist z. B. der Fall, wenn der Aktuator im Inneren der Karosserie "versteckt" werden soll. In dem Fall sind dann aber zwei hydraulische Durchführungen durch die Elektronikschaltung erforderlich.

Der Linearantrieb kann einen Läuferstab aufweisen und eine Verfahrbewegung des Läuferstabs kann das Öffnen des Volumenspeichers gegen die Federkraft eines Federelements bewirken.

Gemäß einer Weiterbildung kann vorgesehen sein, dass sich das Federelement zumindest mittelbar an dem Gehäuse und dem Läuferstab abstützt, wobei das Federelement in dem Läuferstab angeordnet ist. Dabei lässt sich eine besonders kleinbauende Ausführung des Druckmodulators realisieren.

Außerdem kann durch die erfindungsgemäße Anordnung vermieden werden, dass ein Teil der Hydraulikleitung relativ zum Gehäuse des Druckmodulators bewegt werden muss. Dadurch wird die Funktionssicherheit des Druckmodulators erhöht. Außerdem kann die Anzahl dynamischer Abdichtungen verringert werden.

Der kompakten Ausgestaltung des Druckmodulators förderlich ist es zudem, wenn ein in den Läuferstab ragender fest mit dem Gehäuse verbundener Steuerkolben vorgesehen ist, an dem sich das Federelement abstützt. Der Steuerkolben, das Federelement und der Läuferstab sind vorzugsweise koaxial angeordnet. Die Länge des Steuerkolbens und des komprimierten Federelements können im Wesentlichen der Länge des Läuferstabs entsprechen.

Weitere Vorteile ergeben sich, wenn der Druckmodulator genau eine dynamische Dichtung aufweist, die vorzugsweise zwischen dem Läuferstab und dem Steuerkolben wirkt. Die Funktionssicherheit kann erhöht werden, wenn wenige dynamische Dichtungen vorgesehen sind.

Der Steuerkolben kann als Hohlkörper ausgebildet sein. Dadurch ist es insbesondere möglich, Hydraulikflüssigkeit, die in das Innere des Läuferstabs gelangt, beispielsweise durch eine Schleppleckage im Bereich der dynamischen Dichtung, abzuführen. In diesem Zusammenhang ist es vorteilhaft, wenn der Steuerkolben mit einem verschließbaren Flüssigkeitsablass verbunden ist. Der Flüssigkeitsablass kann beispielsweise in einer Stirnseite des Gehäuses vorgesehen sein.

Besondere Vorteile ergeben sich, wenn der Läuferstab von Hydraulikmedium umströmbar in der hydraulischen Leitung angeordnet ist. Insbesondere kann der Läuferstab im Gehäuse geführt sein und kann die Hydraulikflüssigkeit eine Schmierung des Läuferstabs bewirken, sodass dieser verschleiß- und reibungsarm im Gehäuse bewegbar ist. Insbesondere kann das Hydraulikmedium über das Führungsspiel zwischen dem Läuferstab und einer Führungsbuchse durchgeführt sein.

Weiterhin kann vorgesehen sein, dass der Läuferstab zumindest eine Hydraulikfluidausnehmung aufweist, insbesondere an seiner Mantelfläche zumindest eine sich in Längsrichtung des Läuferstabs oder wendelförmig erstreckende Rille aufweist. Somit kann Hydraulikflüssigkeit über die Rille entlang des Läuferstabs fließen. Alternativ oder zusätzlich ist es denkbar, dass der Läuferstab in Längsrichtung des Läuferstabs ausgerichtete Durchgangsöffnungen aufweist, durch die hindurch Hydraulikflüssigkeit vom Hydraulikeingang zum Hydraulikausgang des Druckmodulators fließen kann.

Gemäß einer besonders vorteilhaften Ausgestaltung der Erfindung kann vorgesehen sein, dass in der hydraulischen Leitung eine durch den Läuferstab betätigbare Ventilanordnung vorgesehen ist. Insbesondere kann das Ventil durch den Läuferstab geöffnet werden, wenn dieser sich in einer Ausgangsstellung befindet, d. h. durch das Federelement bis zu einem definierten Maximaldruck in eine vorgegebene Stellung gedrückt wird. Dadurch kann der Läuferstab beispielsweise gegen eine, insbesondere federbeaufschlagte, Kugel eines Rückschlagventils drücken und dadurch das Ventil öffnen. Wird dagegen die Antiblockierfunktion aktiviert und der Läuferstab entgegen der Federkraft des Federelements bewegt, wird der Kontakt zwischen dem Läuferstab und der Kugel des Ventils aufgelöst, sodass die Kugel das Ventil verschließt und ein weiteres Nachführen von Hydraulikflüssigkeit durch einen Geberzylinder verhindert wird. Durch eine so ausgeführte Ventilanordnung ist nur ein einziges Ventil im Druckmodulator notwendig. Als Alternative zur Kugel wäre auch ein Bauteil mit darauf angebrachter Dichtung denkbar, welches eine Bohrung zwischen hydraulischem Eingang und dem Läuferstab verschließt.

Das Gehäuse des Druckmodulators kann eine zylindrische Außenform aufweisen, sodass eine einfache Montage an einem Fahrzeug, beispielsweise über Schellen oder über Einschieben in Rohre, erfolgen kann. Dies erleichtert zudem, das Gehäuse mittels O-Ringen gegen Außeneinflüsse kostengünstig abzudichten.

In der schematischen Zeichnung ist ein Ausführungsbeispiel der Erfindung dargestellt und in der nachfolgenden Beschreibung näher erläutert.

Es zeigen:
- Fig. 1: eine schematische Darstellung einer hydraulischen Bremsanlage mit Antiblockierfunktion für ein Zweirad;
- Fig. 2a: einen Druckmodulator in einer perspektivischen Schnittansicht, in dem die für die Antiblockierfunktion notwendigen Teile integriert sind, bei nicht aktivierter ABS-Funktion;
- Fig. 2b: ein Detail A der Fig. 2a;
- Fig. 3a: eine der Fig. 2a entsprechende Darstellung bei aktivierter ABS-Funktion;
- Fig. 3b: ein Detail B der Fig. 3a;
- Fig. 4: einen vergrößerten Ausschnitt des Druckmodulators in einer Schnittdarstellung; und

- Fig. 5: einen Läuferstab.

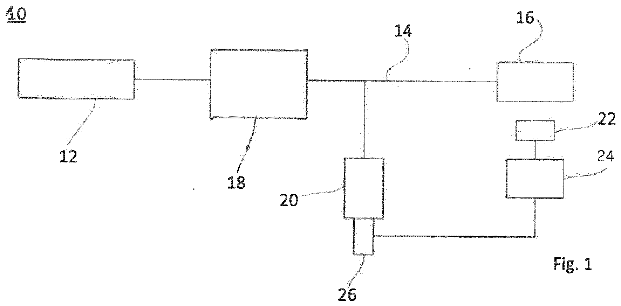

Fig. 1 zeigt eine insgesamt mit dem Bezugszeichen 10 bezeichnete Bremsanlage mit Antiblockierfunktion für ein Elektrofahrrad.

Die hydraulische Bremsanlage 10 umfasst einen, z. B. über einen Bremshebel, betätigbaren Geberzylinder 12, der über eine hydraulische Leitung 14 hydraulisch kommunizierend mit einer Radbremse 16 verbunden ist. Über den Geberzylinder 12 ist in bekannter Art und Weise der für das Ansprechen der Radbremse 16 notwendige hydraulische Druck erzeugbar.

Wie Fig. 1 weiter zeigt, ist stromabwärts vom Geberzylinder 12 eine Ventilanordnung 18 angeordnet. Weiterhin weist die hydraulische Bremsanlage 10 einen gegen eine Federkraft eines Federelements zu öffnenden Volumenspeicher 20, einen Drehzahlsensor 22 sowie ein Steuergerät 24 auf.

In der schematischen Darstellung gemäß Fig. 1 wurde auf eine Darstellung des Federelements des Volumenspeichers 20 verzichtet. Das Federelement ist vorliegend so dimensioniert, dass die resultierende Federkraft größer als eine durch den Geberzylinder 12 erzeugbare hydraulische Kraft ist.

Wie Fig. 1 weiter zu entnehmen ist, weist die hydraulische Bremsanlage 10 zudem einen über das Steuergerät 24 ansteuerbaren elektrischen Antrieb 26 auf, der wiederum mit dem Federelement des Volumenspeichers in Wirkverbindung steht. Der elektrische Antrieb 26, das Steuergerät 24 und Drehzahlsensor 22 sind über entsprechende Kommunikationsleitungen miteinander verbunden. Der elektrische Antrieb 26 steht dabei derart mit dem Federelement des Volumenspeichers 20 in Wirkverbindung, dass eine aktive Rückstellung des Federelements und damit das Öffnen des Volumenspeichers bewirkbar ist.

Nachfolgend zur Funktionsweise der hydraulischen Bremsanlage 10:
Sobald das Steuergerät 24 mittels des Drehzahlsensors 22 das Blockieren der Räder erkennt, wird der elektrische Antrieb 26 angesteuert, der daraufhin den Volumenspeicher 20 gegen die Federkraft des Federelements öffnet; zeitgleich wird mechanisch oder elektrisch die Ventilanordnung 18 geschlossen.

Somit ist der Geberzylinder 12 von der Radbremse 16 hydraulisch getrennt, d. h. ein Fahrer kann den Druck 10 im Bremssattel nicht weiter erhöhen, da der Griff quasi abgeklemmt ist.

Durch das Öffnen des Volumenspeichers 20 ist das Volumen in der hydraulischen Leitung 14 vergrößert, sodass der hydraulische Druck in der Bremsanlage 10 sinkt.

Mittels des elektrischen Antriebs 26 kann somit der Druck so lange geregelt werden, bis die Fahrstabilität auch ohne Antiblockierfunktion sichergestellt ist. Anschließend wird der Volumenspeicher 20 geschlossen und die Ventilanordnung 18 wird wieder geöffnet, sodass die Bremsanlage 10 wieder ganz normal arbeitet.

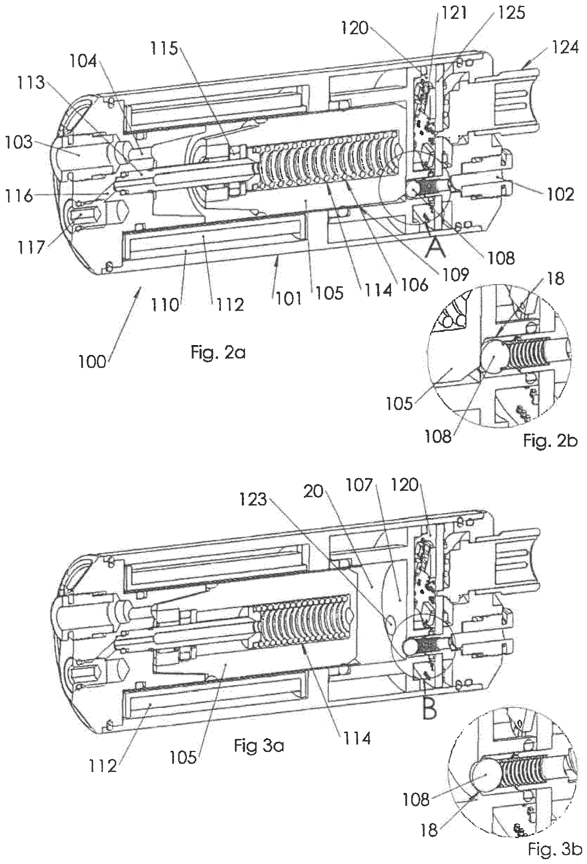

Die Fig. 2a zeigt einen erfindungsgemäßen Druckmodulator 100. Der Druckmodulator 100 umfasst ein Gehäuse 101 mit einem Hydraulikeingang 102 und einem Hydraulikausgang 103. Der Hydraulikeingang 102 und der Hydraulikausgang 103 sind durch eine Hydraulikleitung 104, die Bestandteil der Hydraulikleitung 14 ist, miteinander verbunden.

Die hydraulischen Ein- und Ausgänge 102, 103 können über Steckverbinder realisiert werden, um im Servicefall eine einfache und werkzeuglose Montage/Demontage zu ermöglichen.

Bei nicht aktivierter ABS-Funktion befindet sich ein Läuferstab 105 in einer in der Fig. 2a gezeigten Nullstellung. Der Läuferstab 105 ist aufgrund der Federkraft des Federelements 106 nach rechts bewegt, sodass er an einer Gehäusewand 107 (s. Fig. 3a, die die Situation bei aktivierter ABS-Funktion zeigt) anliegt. In dieser Stellung (s. vergrößerte Darstellung gemäß Fig. 2b) drückt der Läuferstab 105 gegen ein als Kugel ausgebildetes Ventilelement 108 der Ventilanordnung 18, sodass die Ventilanordnung 18 geöffnet ist und Hydraulikflüssigkeit die Ventilanordnung 18 durchströmen kann. Die Hydraulikflüssigkeit kann dann weiterhin entlang eines Spalts zwischen der Mantelfläche des Läuferstabs 105 und der Gehäusewand 109 zum Hydraulikausgang 103 fließen.

Bei aktivierter Antiblockierfunktion wird der als Linearantrieb 110 ausgebildete elektrische Antrieb 26 aktiviert, der den Läuferstab 105 in die in der Fig. 3a gezeigte Stellung entgegen der Federkraft des Federelements 106 bewegt. Dadurch wird der Volumenspeicher 20 geöffnet. Das Volumen der Hydraulikleitung 104 wird demnach vergrößert, sodass der durch die Hydraulikflüssigkeit auf eine Radbremse ausgeübte Druck geringer wird und die Radbremse geöffnet wird. Das Verschieben des Läuferstabs 105 in die in der Fig. 3a gezeigte Stellung hat weiterhin den Effekt, dass das Ventilelement 108 nach links bewegt wird und somit die Ventilanordnung 18 verschließt, s. Darstellung in der Fig. 3b. Ein Geberzylinder ist somit von der Radbremse abgekoppelt.

Der Linearantrieb 110 weist eine zylinderförmige Spulenanordnung 112 auf, durch die der Läuferstab 105 angezogen werden kann.

Das Federelement 106 stützt sich einenends an dem Läuferstab 105 und anderenends an einem Steuerkolben 113 ab, der fest mit dem Gehäuse 101 verbunden ist. Das Federelement stützt sich somit mittelbar über den Steuerkolben 113 am Gehäuse 101 ab. Bei einer Verlagerung des Läuferstabs 105 nach links gemäß Fig. 3a wird demnach das Volumen 114 im Bereich des Federelements 106 im Läuferstab 105 verkleinert, die darin befindliche Luft wird komprimiert.

Der Läuferstab 105 ist gegenüber dem Steuerkolben 113 über eine dynamische Dichtung 115 abgedichtet. Gelangt dennoch Hydraulikflüssigkeit aufgrund von Schleppleckage in das Innere des Läuferstabs 105, so kann dies zu einem Ausfall des Systems führen. Um die Flüssigkeit abführen zu können, ist daher der Steuerkolben 113 hohl ausgebildet und steht mit einem verschließbaren Flüssigkeitsauslass 116 in Verbindung. Insbesondere ist der Flüssigkeitsauslass 116 durch eine Schraube 117 verschließbar.

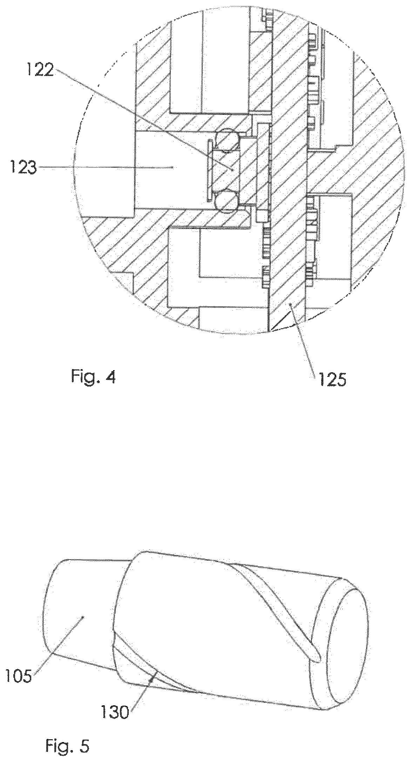

Im Gehäuse 101 ist eine Gehäusekammer 120 vorgesehen, die sich in axialer Richtung unmittelbar an den Volumenspeicher 20 anschließt. In der Gehäusekammer 120 ist eine Elektronikschaltung 121, die das Steuergerät 24 darstellt, vorgesehen. Diese Elektronikschaltung 121 ist somit vollständig in den Druckmodulator 100 integriert. Sie kann einen Beschleunigungssensor, Mikrocontroller und Leistungsendstufen aufweisen. Weiterhin weist die Elektronikschaltung 121 einen Drucksensor 122 (s. Fig. 4) auf, der direkt hydraulisch an den Volumenspeicher 20 angebunden ist. Zu diesem Zweck weist die Gehäusewandung 107 eine Durchgangsöffnung 123 auf, s. Fig. 3a, 4.

Eine zusätzliche oder zum Drucksensor alternative Positionserfassung des Läuferstabs 105, z. B. mittels Hallsensor, ist denkbar.

Weiterhin ist eine elektrische Anbindung 124 zur Übertragung von Steuersignalen, zur Kommunikation mit einer externen Sensorik, insbesondere dem Drehzahlsensor 22, und eine Stromversorgung, vorgesehen.

Die hydraulische Leitung 104 ist im Bereich der Ventilanordnung 18 durch die Elektronikschaltung 121 hindurchgeführt. Die Elektronikschaltung 121 weist eine Platine 125 auf, auf der auch der Drucksensor 122 angeordnet ist.

Die Elektronikschaltung 121 ist in der Kammer 120 geschützt angeordnet. Ein separates Gehäuse muss nicht vorgesehen werden. Sicherheitskritische und zeitkritische Signale werden somit im Druckmodulator 100 erzeugt und bereitgestellt.

Fig. 5 zeigt einen Läuferstab 105 mit auf seiner Mantelfläche ausgebildeten wendelförmigen Rillen 130, die den Durchfluss von Hydraulikflüssigkeit erlauben. Alternativ könnten die Rillen 130 auch parallel zur Längsachse des Läuferstabs 105 verlaufen. Die Rillen 130 können in beliebiger Anzahl und Form vorgesehen sein.

## Patentansprüche

1. Druckmodulator (100) für ein ABS-System mit einem Gehäuse (101), das einen Hydraulikeingang (102) und einen damit über eine hydraulische Leitung (104) verbundenen Hydraulikausgang (103) aufweist, und mit einem Volumenspeicher (20), der bei einer aktivierten Antiblockierfunktion das Volumen der hydraulischen Leitung (104) vergrößert, wobei ein Linearantrieb (110) zur Öffnung des Volumenspeichers (20) vorgesehen ist, wobei eine den Linearantrieb (110) ansteuernde Elektronikschaltung (121) vorgesehen ist, **dadurch gekennzeichnet, dass** die Elektronikschaltung (121) im Gehäuse (101) angeordnet ist und die hydraulische Leitung (104) durch die Elektronikschaltung (121) hindurchgeführt ist.

2. Druckmodulator nach Anspruch 1, **dadurch gekennzeichnet, dass** ein den Druck im Volumenspeicher (20) erfassender im Gehäuse (101) angeordneter Drucksensor (122) vorgesehen ist.

3. Druckmodulator nach einem der vorhergehenden Ansprüche, **dadurch gekennzeichnet, dass** die Elektronikschaltung (121) einen Beschleunigungssensor, einen Mikroprozessor und/oder eine Leistungsendstufe aufweist.

4. Druckmodulator nach Anspruch 2 oder Ansprüchen 2 und 3, **dadurch gekennzeichnet, dass** der Drucksensor (122) auf einer die Elektronikschaltung (121) aufweisenden Platine (125) angeordnet ist.

5. Druckmodulator nach einem der vorhergehenden Ansprüche, **dadurch gekennzeichnet, dass** die Elektronikschaltung (121) axial neben dem Volumenspeicher (20) in einer Kammer (120) des Gehäuses (101) angeordnet ist.

6. Druckmodulator nach einem der vorhergehenden Ansprüche, **dadurch gekennzeichnet, dass** der Linearantrieb (110) einen Läuferstab (105) aufweist und eine Verfahrbewegung des Läuferstabs (105) das Öffnen des Volumenspeichers (20) gegen die Federkraft eines Federelements (106) bewirkt.

7. Druckmodulator nach Anspruch 6, **dadurch gekennzeichnet, dass** sich das Federelement (106) zumindest mittelbar an dem Gehäuse (101) und dem Läuferstab (105) abstützt, wobei das Federelement (106) in dem Läuferstab (105) angeordnet ist.

8. Druckmodulator nach Anspruch 6 oder 7, **dadurch gekennzeichnet, dass** ein in den Läuferstab (105) ragender und fest mit dem Gehäuse (101) verbundener Steuerkolben (113) vorgesehen ist, an dem sich das Federelement (106) abstützt.

9. Druckmodulator nach Anspruch 8, **dadurch gekennzeichnet, dass** der Steuerkolben (113) als Hohlkörper ausgebildet ist.

10. Druckmodulator nach einem der vorhergehenden Ansprüche 6 bis 9, **dadurch gekennzeichnet, dass** der Läuferstab (105) vom Hydraulikmedium umströmbar in der hydraulischen Leitung (104) angeordnet ist.

11. Druckmodulator nach einem der vorhergehenden Ansprüche 6 bis 10, **dadurch gekennzeichnet, dass** der Läuferstab (105) zumindest eine Hydraulikfluidausnehmung aufweist, insbesondere an seiner Mantelfläche zumindest eine sich in Längsrichtung des Läuferstabs (105) oder wendelförmig erstreckende Rille (130) aufweist.

12. Druckmodulator nach einem der vorhergehenden Ansprüche 6 bis 11, **dadurch gekennzeichnet, dass** in der hydraulischen Leitung (104) eine durch den Läuferstab (105) betätigbare Ventilanordnung (18) vorgesehen ist.

13. Druckmodulator nach einem der vorhergehenden Ansprüche, **dadurch gekennzeichnet, dass** der Druckmodulator (100) genau eine dynamische Dichtung (115) aufweist.

14. Hydraulische Bremsanlage (11) mit Antiblockierfunktion, umfassend einen den hydraulischen Druck erzeugenden Geberzylinder (12), der über eine hydraulische Leitung (14), in der ein Druckmodulator (100) nach einem der vorhergehenden Ansprüche angeordnet ist, mit einer Radbremse (16) hydraulisch kommunizierend verbunden ist.

## Claims

1. A pressure modulator (100) for an ABS system, comprising a housing (101) which has a hydraulic inlet (102) and a hydraulic outlet (103) connected thereto via a hydraulic line (104), and comprising a volume accumulator (20) which increases the volume of the hydraulic line (104) during an activated anti-lock function, wherein a linear drive (110) is provided for opening the volume accumulator (20), wherein an electronic circuit (121), which controls the linear drive (110), is provided, **characterized in that** the electronic circuit (121) is disposed in the housing (101) and the hydraulic line (104) is routed through the electronic circuit (121).

2. The pressure modulator as claimed in claim 1, **characterized in that** a pressure sensor (122), which detects the pressure in the volume accumulator (20) and is disposed in the housing (101), is provided.

3. The pressure modulator as claimed in one of the preceding claims, **characterized in that** the electronic circuit (121) comprises an acceleration sensor, a microprocessor, and/or a power output stage.

4. The pressure modulator as claimed in claim 2 or claims 2 and 3, **characterized in that** the pressure sensor (122) is disposed on a printed circuit board (125) comprising the electronic circuit (121).

5. The pressure modulator as claimed in one of the preceding claims, **characterized in that** the electronic circuit (121) is disposed axially next to the volume accumulator (20) in a chamber (120) of the housing (101).

6. The pressure modulator as claimed in one of the preceding claims, **characterized in that** the linear drive (110) comprises a rotor bar (105) and a displacement movement of the rotor bar (105) effectuates the opening of the volume accumulator (20) against the spring force of a spring element (106).

7. The pressure modulator as claimed in claim 6, **characterized in that** the spring element (106) is supported at least indirectly on the housing (101) and the rotor bar (105), wherein the spring element (106) is disposed in the rotor bar (105).

8. The pressure modulator as claimed in claim 6 or 7, **characterized in that** a control piston (113) is provided, which extends into the rotor bar (105), is fixedly connected to the housing (101), and on which the spring element (106) is supported.

9. The pressure modulator as claimed in claim 8, **characterized in that** the control piston (113) is designed as a hollow body.

10. The pressure modulator as claimed in one of the preceding claims 6 to 9, **characterized in that** the rotor bar (105) is disposed in the hydraulic line (104) in such a way that hydraulic medium can flow around the rotor bar.

11. The pressure modulator as claimed in one of the preceding claims 6 to 10, **characterized in that** the rotor bar (105) comprises at least one hydraulic fluid recess, in particular comprising, on its lateral face, at least one groove (130) extending helically or in the longitudinal direction of the rotor bar (105).

12. The pressure modulator as claimed in one of the preceding claims 6 to 11, **characterized in that** a valve arrangement (18), which can be actuated by means of the rotor bar (105), is provided in the hydraulic line (104).

13. The pressure modulator as claimed in one of the preceding claims, **characterized in that** the pressure modulator (100) comprises precisely one dynamic seal (115).

14. A hydraulic brake system (11) having an anti-lock function, comprising a master cylinder (12) which generates a hydraulic pressure and which is connected to a wheel brake (16) in a hydraulically communicating way via a hydraulic line (14), in which a pressure modulator (100) according to one of the preceding claims is disposed.

## Revendications

1. Modulateur de pression (100) pour un système ABS avec un carter (101) qui comporte une entrée hydraulique (102) et une sortie hydraulique (103) reliée à celle-ci par l'intermédiaire d'une conduite hydraulique (104), et avec un accumulateur volumétrique (20) qui augmente le volume de la conduite hydraulique (104) lorsqu'une fonction antiblocage est activée, moyennant quoi un entraînement linéaire (110) est prévu pour l'ouverture de l'accumulateur volumétrique (20), moyennant quoi un circuit électronique (121) commandant l'entraînement linéaire (110) est prévu, **caractérisé en ce que** le circuit électronique (121) est agencé dans le carter (101) et la conduite hydraulique (104) passe à travers le circuit électronique (121).

2. Modulateur de pression selon la revendication 1, **caractérisé en ce qu'**un capteur de pression (122) agencé dans le carter (101) et détectant la pression dans l'accumulateur volumétrique (20) est prévu.

3. Modulateur de pression selon l'une quelconque des revendications précédentes, **caractérisé en ce que** le circuit électronique (121) comporte un capteur d'accélération, un microprocesseur et/ou un étage de sortie de puissance.

4. Modulateur de pression selon la revendication 2 ou les revendications 2 et 3, **caractérisé en ce que** le capteur de pression (122) est agencé sur un circuit imprimé (125) comportant le circuit électronique (121).

5. Modulateur de pression selon l'une quelconque des revendications précédentes, **caractérisé en ce que** le circuit électronique (121) est agencé axialement à proximité de l'accumulateur volumétrique (20) dans une chambre (120) du carter (101).

6. Modulateur de pression selon l'une quelconque des revendications précédentes, **caractérisé en ce que** l'entraînement linéaire (110) présente une tige de rotor (105) et un mouvement de translation de la tige de rotor (105) provoque l'ouverture de l'accumulateur volumétrique (20) contre la force élastique d'un élément de ressort (106).

7. Modulateur de pression selon la revendication 6, **caractérisé en ce que** l'élément de ressort (106) s'appuie au moins indirectement sur le carter (101) et la tige de rotor (105), l'élément de ressort (106) étant agencé dans la tige de rotor (105).

8. Modulateur de pression selon la revendication 6 ou 7, **caractérisé en ce qu'**un piston de commande (113), faisant saillie dans la tige de rotor (105) et solidaire du carter (101) est prévu, sur lequel s'appuie l'élément de ressort (106).

9. Modulateur de pression selon la revendication 8, **caractérisé en ce que** le piston de commande (113) est réalisé sous forme de corps creux.

10. Modulateur de pression selon l'une quelconque des revendications précédentes 6 à 9, **caractérisé en ce que** la tige de rotor (105) est agencée dans la conduite hydraulique (104) de manière à ce que le milieu hydraulique puisse s'écouler autour.

11. Modulateur de pression selon l'une quelconque des revendications précédentes 6 à 10, **caractérisé en ce que** la tige de rotor (105) présente au moins un évidement pour fluide hydraulique, et présente en particulier au niveau de sa surface latérale au moins une rainure (130) s'étendant dans la direction longitudinale de la tige de rotor (105) ou de manière hélicoïdale.

12. Modulateur de pression selon l'une quelconque des revendications précédentes 6 à 11, **caractérisé en ce qu'**un agencement formant clapet (18) pouvant être actionné grâce à la tige de rotor (105) est prévu dans la conduite hydraulique (104).

13. Modulateur de pression selon l'une quelconque des revendications précédentes, **caractérisé en ce que** le modulateur de pression (100) présente exactement un joint dynamique (115).

14. Système de freinage hydraulique (11) à fonction antiblocage, comprenant un maître-cylindre (12), générant la pression hydraulique, qui est relié à un frein de roue (16) par communication hydraulique via une conduite hydraulique (14) dans laquelle est agencé un modulateur de pression (100) selon l'une quelconque des revendications précédentes.
